# EUROPÄISCHE PATENTSCHRIFT

(11) **EP 1 855 377 B1**
(45) Veröffentlichungstag und Bekanntmachung des Hinweises auf die Patenterteilung: **09.02.2011**
(21) Anmeldenummer: 06009420.8
(22) Anmeldetag: 08.05.2006
(51) Int. Cl.: H02P 7/00

(54) **Elektrische Motoransteuerung**
Electric motor control
Commande d'un moteur électrique

(43) Veröffentlichungstag der Anmeldung: 14.11.2007
(73) Patentinhaber: Integrated Dynamics Engineering GmbH, 65479 Raunheim (DE)
(72) Erfinder: Heiland, Peter, 65479 Raunheim (DE)
(74) Vertreter: Kampfenkel, Klaus

(56) Entgegenhaltungen:
- EP-A2- 0 800 979
- US-A- 5 838 877
- DATABASE WPI Week 200034 Derwent Publications Ltd., London, GB; AN 2000-393600 XP002401608 & JP 2000 134943 A (HAIDEN KENKYUSHO KK) 12. Mai 2000 (2000-05-12)

## Beschreibung

Die Erfindung bezieht sich auf eine elektrische Motoransteuerung, die eine Stromversorgungsschaltung mit Pulsweitenmodulation, eine Treiberschaltung und eine H-Brückenschaltung für einen Gleichstrommotor umfasst. Die Erfindung bezieht sich auch auf die Kombination der elektrischen Motoransteuerung mit wenigstens einem Linearmotor.

Eine Vorrichtung zur elektrischen Motoransteuerung wird in EP 0 800 979 A2 beschrieben. Hierbei befindet sich ein Elektromotor im Querzweig einer H-Brücke. Der über diese H-Brücke fließende Strom wird daraufhin geprüft, ob abnorme Werte vorliegen. Wird ein abnormer Wert festgestellt, so werden die Transistoren Q1 und Q4 mit Pausen, d.h. von einer PWM-Steuerung entsprechend angesteuert.

US 5 838 877 beschreibt eine Vorrichtung zur Unterdrückung von Hochfrequenzstörungen, die von einem Elektromotor erzeugt werden, der mittels PWM angetrieben wird. Hierzu werden die Kabel, die den PWM gepulsten Strom führen, sowie das Motorgehäuse abgeschirmt. Ferner wird eines der Kabel über einen Kondensator C2 geerdet. Dem Elektromotor ist ein aus zwei Spulen L1 und L2 und einem Kondensator C1 bestehender Filter vorgeschaltet. Jeweils eine der beiden Spulen ist auf den beiden Seiten des Motors geschaltet. Der Kondensator ist parallel zum Motor und den beiden Spulen geschaltet.

Bei der Schwingungsisolation von Prüf- und Produktionsanlagen werden Elektromotoren verwendet, um Stellvorgänge an den Anlagen auszuführen. Diese Stellvorgänge sollen möglichst keine eigenen Schwingungsvorgänge verursachen. Zur Zeit werden die Elektromotoren in solchen Schwingungsisolationssystemen, die sich vorwiegend als Linearmotoren darstellen, über sogenannte PWM-Verstärker mit einer PWM-Frequenz bis zu ungefähr 30kHz betrieben. Es hat sich herausgestellt, dass der Motorstrom (das sogenannte "Motorsignal") eine gewisse Welligkeit (sogenanntes "Ripple" ) aufweist, was jedoch im Zusammenhang mit Antrieben bei Schwingungsisolationssystemen unerwünscht ist.

Der Erfindung liegt deshalb die Aufgabe zugrunde, eine elektrische Motoransteuerung zu schaffen, die eine äußerst geringe Welligkeit in dem Motorantriebsstrom (geringes Rauschen in dem Motorsignal) aufweist.

Die gestellte Aufgabe wird aufgrund der Maßnahmen der Ansprüche gelöst.

Im Einzelnen ist eine Stromversorgungsschaltung mit Pulsweitenmodulation für eine PWM-Frequenz von etwa >30kHz und mehr und eine Treiberschaltung zum Betrieb einer H-Brückenschaltung vorgesehen, die vier steuerbare Zweige und einen Querzweig zur Aufnahme eines Gleichstrommotors aufweist. Jedem Anschluss des Gleichstrommotors ist eine im Querzweig angeordnete Drossel zugeordnet, und der Gleichstrommotor wird von einem Kondensator überbrückt. Die so ausgebildeten PWM-Verstärker weisen eine hohe Bandbreite und geringes Rauschen auf, so dass mehrere solcher PWM-Verstärker nebeneinander angeordnet werden können, ohne sich durch Rauschsignale gegenseitig zu stören. Solches Übersprechen (Cross Talk) wird vor allem dann minimiert, wenn als Drosseln sogenannte Ringkerndrosseln verwendet werden.

Die Erfindung ist besonders vorteilhaft anwendbar in Kombination mit Linearmotoren, auch für große Leistungen.

Die Erfindung wird anhand der Zeichnung beschrieben. Dabei zeigt:
Fig. 1 ein Schema der elektrischen Motoransteuerung und
Fig. 2 eine H-Brückenschaltung.

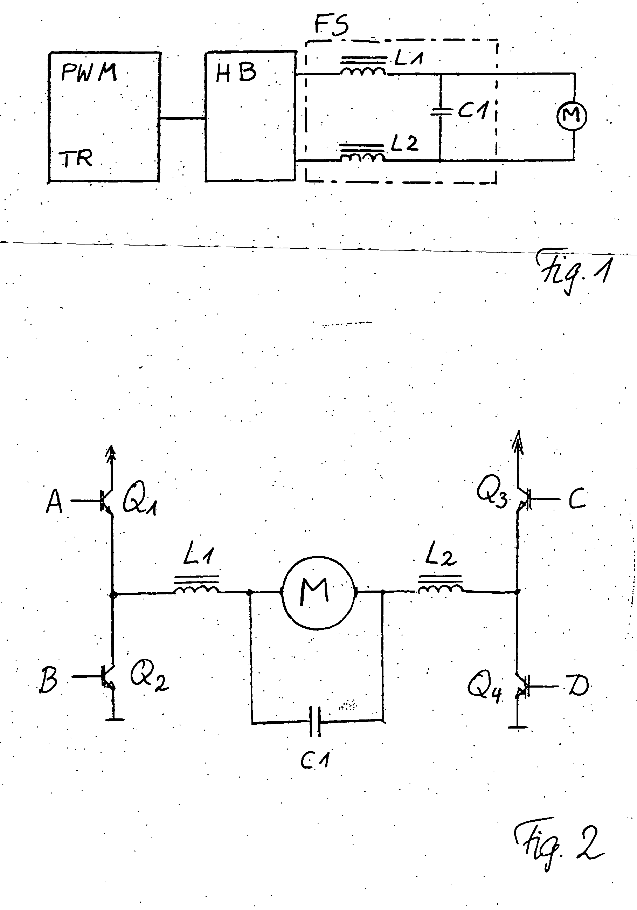

Fig. 1 zeigt das Grundprinzip der elektrischen Motoransteuerung. Der Motor M soll mit möglichst glattem Gleichstrom gespeist werden. Hierzu ist eine Stromversorgungsschaltung mit Pulsweitenmodulation PWM vorgesehen, die mit 50kHz betrieben wird. An die PWM-Schaltung ist eine H-Brücke HB angeschlossen und wird durch eine Treiberschaltung TR gesteuert, die in der PWM-Schaltung integriert ist. Eine Filterstufe FS ist zwischen der H-Brücke und dem Motor M geschaltet. Die Filterstufe umfasst eine erste Induktivität L₁, eine zweite Induktivität L₂ und einen Kondensator C₁. Die Induktivitäten L₁ und L₂ sind den jeweiligen Motoranschlüssen vorgeschaltet, und der Kondensator C₁ überbrückt die Motoranschlüsse.

Als Induktivitäten L₁, L₂ werden Ringkerndrosseln verwendet, die sich als besonders geeignet herausgestellt haben, um Übersprechen zwischen benachbarten Motoransteuerungen zu vermeiden. Als Kondensator wird ein Folienkondensator verwendet. Bei einer PWM-Frequenz von 50kHz werden die Drosseln L₁ und L₂ zu 940µH und der Kondensator C₁ auf 4.7µF dimensioniert. Die Dimensionierung des Filters FS erfolgt mit Rücksicht auf die PWM-Frequenz und in Anpassung an die Motorimpedanz und kann bei einer PWM-Frequenz von 50kHz im Bereich von 680µH bis 1200µH für die Drosseln und 3.3µF bis 5.6µF für den Kondensator gewählt werden. Bei einer PWM-Frequenz von 150kHz kann die Induktivität der Drosseln etwa bei 180µH - 390µH und die Kapazität des Kondensators bei etwa 3.3uF - 5.6µF liegen.

Fig. 2 zeigt eine einfache H-Brückenschaltung mit vier Transistoren Q₁, Q₂, Q₃ und Q₄ als den steuerbaren Zweigen und der Filterschaltung FS sowie dem Motor M im Querzweig. Es sind vier Steueranschlüsse A, B, C und D vorgesehen, um jeweils zwei der Transistoren durchzuschalten. Zum Motorlauf in eine Richtung werden Qₗ und Q₄ durchgeschaltet und zum Motorlauf in die andere Richtung die Transistoren Q₃ und Q₂. Die Ansteuerung der jeweiligen Anschlüsse A, B, C, D erfolgt über die Treiberschaltung TR.

Es versteht sich, dass anstelle der einfachen H-Brücke, wie in Fig. 2 dargestellt, auch aufwendigere H-Brückenschaltungen Verwendung finden können, hauptsächlich um Fehlsteuerungen der Treiberschaltung ohne schwerwiegende Konsequenzen zuzulassen.

Die PWM-Schaltung kann auch für noch höhere Frequenzen als 50kHz konzipiert werden. In einem solchen Fall kann man mit den Werten für die Induktivitäten L₁, L₂ und den Kondensator C₁ weiter herunter gehen. Wegen der Verwendung von Ringkerndrosseln als Induktivitäten und des Folienkondensators stellt die PWM-Frequenz von 200kHz einen guten Kompromiss zwischen noch nicht allzu hoher PWM-Frequenz und nicht allzu großen Werten für die Induktivitäten und Kapazitäten der Filterschaltung dar.

Die Induktivitäten L₁ und L₂ können auch durch eine Reihenschaltung durch mehrere Drosseln realisiert werden.

## Patentansprüche

1. Elektrische Motoransteuerung, umfassend:
eine Stromversorgungsschaltung (PWM) mit Pulsweitenmodulation;
eine Treiberschaltung (TR), und
eine H-Brückenschaltung (HB) mit vier steuerbaren Zweigen (Q₁, Q₂, Q₃, Q₄) und einem Querzweig zur Aufnahme eines Gleichstrommotors (M),
**dadurch gekennzeichnet,**
**dass** die Stromversorgungsschaltung (PWM) mit einer PWM-Frequenz von 50kHz oder mehr arbeitet, und
**dass** in dem Querzweig der H-Brückenschaltung (HB) jedem Anschluss des Gleichstrommotors (M) eine Drossel (L₁, L₂) zugeordnet ist und der Gleichstrommotor (M) von einem Kondensator (C₁) überbrückt ist.

2. Motoransteuerung gemäß Anspruch 1,
**dadurch gekennzeichnet, dass** die Drosseln (L₁, L₂) als Ringkerndrosseln ausgebildet sind.

3. Motoransteuerung gemäß Anspruch 1 oder 2,
**dadurch gekennzeichnet, dass** der Kondensator (C₁) ein Folienkondensator ist.

4. Motoransteuerung gemäß einem der Ansprüche 1 bis 3,
**dadurch gekennzeichnet, dass** bei einer Betriebsfrequenz von 50kHz die Drosseln (L₁, L₂) im Bereich von 680µH bis 1200µH und der Kondensator (C₁) im Bereich von 3.3µF bis 5.6µF ausgelegt sind.

5. Motoransteuerung gemäß Anspruch 4,
**dadurch gekennzeichnet, dass** die Dimensionierung der Drosseln (L₁, L₂) etwa 940µH und des Kondensators (C₁) etwa 4.7µF beträgt.

6. Elektrische Motoransteuerung gemäß einem der Ansprüche 1 bis 5 in Kombination mit wenigstens einem Linearmotor (M).

## Claims

1. Electric motor control, comprising:
a current supply circuit (PWM) with pulse width modulation;
a driver circuit (TR), and
an H-bridge circuit (HB) having four controllable branches (Q₁, Q₂, Q₃, Q₄) and a transverse branch for receiving a direct current motor (M),
**characterised in that**
the current supply circuit (PWM) operates at a PWM frequency of 50 kHz or more, and
in the transverse branch of the H-bridge circuit (HB) each terminal of the direct current motor (M) is allocated an inductor (L₁, L₂) and the direct current motor (M) is bridged by a capacitor (C₁).

2. Motor control as claimed in claim 1,
**characterised in that** the inductors (L₁, L₂) are formed as toroidal core inductors.

3. Motor control as claimed in claim 1 or 2,
**characterised in that** the capacitor (C₁) is a film capacitor.

4. Motor control as claimed in any one of claims 1 to 3,
**characterised in that** in the case of an operating frequency of 50 kHz, the inductors (L₁, L₂) are rated in the range of 680 µH to 1200 µH and the capacitor (C₁) is rated in the range of 3.3 µF to 5.6 µF.

5. Motor control as claimed in claim 4,
**characterised in that** the dimensioning of the inductors (L₁, L₂) is about 940 µH and the dimensioning of the capacitor (C₁) is about 4.7 µF.

6. Electric motor control as claimed in any one of claims 1 to 5 in combination with at least one linear motor (M).

## Revendications

1. Commande de moteur électrique, comprenant :
un circuit d'alimentation électrique (PWM) avec modulation d'impulsions en largeur ;
un circuit d'excitation (TR), et
un circuit en pont en H (HB) avec quatre branches contrôlables (Q₁, Q₂, Q₃, Q₄) et une branche transversale pour loger un moteur à courant continu (M),
**caractérisée en ce que**
le circuit d'alimentation en courant (PWM) travaille avec une fréquence de modulation d'impulsions en largeur de 50 kHz ou plus, et
**en ce qu'**une bobine de réactance (L₁, L₂) est attribuée à chaque branchement du moteur à courant continu (M) dans la branche transversale du circuit en pont en H (HB) et le moteur à courant continu (M) est shunté par un condensateur (C₁).

2. Commande de moteur selon la revendication 1,
**caractérisée en ce que** les bobines de réactance (L₁, L₂) sont conçues comme des bobines de réactance à noyau toroïdal.

3. Commande de moteur selon la revendication 1 ou 2,
**caractérisée en ce que** le condensateur (C₁) est un condensateur à films.

4. Commande de moteur selon l'une quelconque des revendications 1 à 3,
**caractérisée en ce que**, pour une fréquence de service de 50 kHz, les bobines de réactance (L₁, L₂) sont conçues dans la plage de 680 µH à 1200 µH et le condensateur (C₁) dans la plage de 3,3 µF à 5,6 µF.

5. Commande de moteur selon la revendication 4,
**caractérisée en ce que** le dimensionnement des bobines de réactance (L₁, L₂) est d'environ 940 µH et celui du condensateur (C₁) d'environ 4,7 µF.

6. Commande de moteur électrique selon l'une quelconque des revendications 1 à 5 en combinaison avec au moins un moteur linéaire (M).
